# EUROPEAN PATENT APPLICATION

(11) **EP 3 315 770 A1**
(43) Date of publication of application: **02.05.2018**
(21) Application number: 16196377.2
(22) Date of filing: 28.10.2016
(51) Int. Cl.: F03D 15/00, F03D 9/28

(54) **A WIND TURBINE COMPRISING A HYDRAULIC DRIVE TRAIN**

(71) Applicant: Hydrautrans B.V., 3526 KL Utrecht (NL)
(72) Inventor: BASSTEIN, Augustinus Franciscus Herman, 4841 GZ Prinsenbeek (NL); GROENEMANS, Hugo, 3526 KL Utrecht (NL)
(74) Representative: De Vries & Metman

(57) **Abstract**

A wind turbine (1) comprising a turbine rotor (3) with one or more blades, a generator (4) and a drive train (5) interconnecting the turbine rotor (3) and the generator (4). The drive train (5) is provided with a main gear (6) directly driven by the turbine rotor (3). A plurality of pinions engages the main gear (6). Each of the pinions drives a hydraulic pump (7). A hydro motor (8) is connected to the respective pumps (7) via respective high pressure (9) and low pressure lines. The hydro motor (8) engages an input shaft of the generator (4). A planetary gear transmission (10) is arranged between each pinion and the respective hydraulic pump (7).

## Description

The present invention relates to a wind turbine comprising a turbine rotor with one or more blades, a generator, a drive train interconnecting the turbine rotor and the generator. The drive train is provided with a main gear directly driven by the turbine rotor, a plurality of pinions engaging the main gear, a plurality of hydraulic pumps each being driven by one of the pinions, at least one hydro motor connected to the respective pumps via respective high pressure lines and low pressure lines, the at least one hydro motor engaging an input shaft of the generator.

A wind turbine with a hydraulic transmission is for example disclose in WO 2013/104694. Large multi-MW wind turbines with long blades appear to be most efficient for generating electricity from wind. Due to a natural limit to the maximum speed of the tip of the blades when moving through air, the rotation speed of the turbine may be lower with increasing blade length. For wind turbines with larger blade lengths the rotation speed of the turbine rotor may be limited to 10 revolutions per minute, for example. The generator is suitable for transferring power generated by the blades into electricity and may rotate with a rotation speed of 1.500 revolutions per minute, for example. This means that the drive train between the generator and the turbine rotor may have a transmission ratio of 150. In the known wind turbine this transmission ratio is created by a mechanical transmission between the main gear and the pinions, and a hydraulic transmission between the hydraulic pump and the hydro motor.

An object of the invention is to provide a wind turbine with improved efficiency.

This object is accomplished with the wind turbine according to the invention, wherein a planetary gear transmission is arranged between each pinion and the respective hydraulic pump. This provides the opportunity to achieve a high mechanical transmission ratio through two gear transmission stages. Consequently, the rotational speed of the pumps can be relatively high, which require relatively small hydraulic pumps, leading to a lower weight and improved total efficiency of the drive train. Furthermore, an advantage of applying relatively small pumps is that the number of pumps can be varied easily whereas the size of the main gear remains the same. This provides a high degree of flexibility of dimensioning the wind turbine in terms of output power by applying more or less hydraulic pumps.

In practice the main gear may be an external gear, and the axes of rotation of the pinions and the main gear may be parallel.

The capacity of the hydro motor, or hydro motors, can be the same as the capacity of the hydraulic pumps.

In order to create a wide range of power capacity of the wind turbine the pumps may be located at opposite sides of the main gear.

The pumps may have substantially the same capacity. This provides the opportunity to build wind turbines having different nominal power in a modular way by applying more or less similar pumps.

Similarly, when the drive train has at least two hydro motors, the motors may have substantially the same capacity.

It may be clear that a lot of combinations of number of pumps, motors and generators can be made without changing the dimensions of the turbine rotor and main gear of the wind turbine.

Optionally, the drive train may comprise an annular gear box encasing the main gear and supporting the planetary gear transmissions and the hydraulic pumps. The annular gear box may for example be coupled to the main bearing. Using such an annular gear box contributes to a lower weight of the drive train as a whole.

Furthermore, a wind turbine is disclosed comprising a turbine rotor with one or more blades, a generator and a drive train interconnecting the turbine rotor and the generator. The drive train is provided with a main gear directly driven by the turbine rotor, a plurality of pinions engaging the main gear, a plurality of hydraulic pumps, each pump being driven by one of said pinions, and at least one hydro motor connected to the respective pumps via respective high pressure and low pressure lines. The at least one hydro motor engages an input shaft of the generator. The pumps are located at opposite sides of the main gear.

Furthermore, a wind turbine is disclosed comprising a turbine rotor with one or more blades, a generator and a drive train interconnecting the turbine rotor and the generator. The drive train is provided with a main gear directly driven by the turbine rotor, a plurality of pinions engaging the main gear, a plurality of hydraulic pumps, each pump being driven by one of said pinions, and at least one hydro motor connected to the respective pumps via respective high pressure and low pressure lines. The at least one hydro motor engages an input shaft of the generator and is connected to one or more pumps at an opposite side of the main gear.

The invention will hereafter be elucidated with reference to very schematic drawings showing embodiments of the invention by way of example.
Fig. 1 is a perspective view of a part of an embodiment of the wind turbine according to the invention.
Fig. 2 is a similar view as Fig. 1 of a part of the embodiment of Fig. 1 on a larger scale.
Fig. 3 is a similar view as Fig. 2, but showing an alternative embodiment.
Fig. 4 shows a cross section of the main gear with pumps.

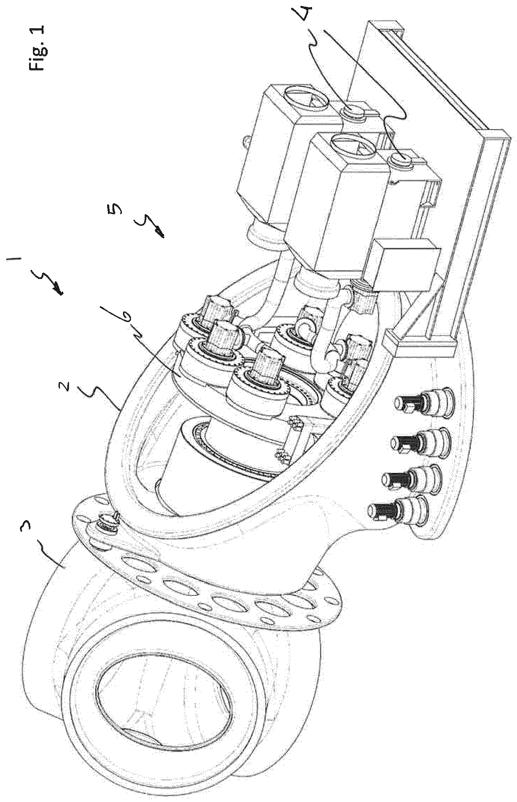

Fig. 1 shows a part of an embodiment of a wind turbine 1 according to the invention. The wind turbine 1 has a nacelle 2 mounted on a tower (not shown). The wind turbine 1 comprises a turbine rotor 3 with three blades (not shown) and two generators 4 which are mounted inside the nacelle 2. The generators 4 are suitable for transferring power generated by the blades 3 into electricity and rotate with a maximum rotation speed of 1500 revolutions per minute, for example, so that the dimensions of the generators 4 are limited. The turbine rotor 3 rotates at a much lower speed, for example 10 revolutions per minute.

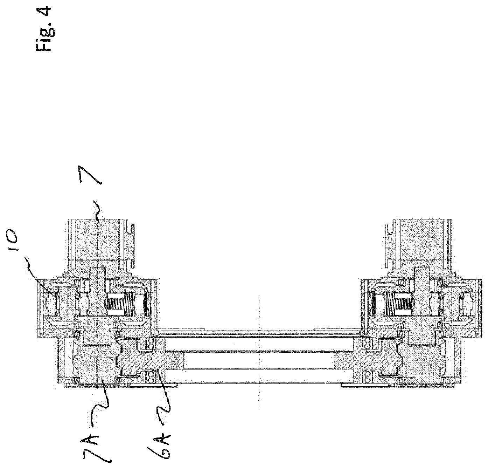

A drive train 5 interconnects the turbine rotor 3 and the generators 4. The drive train 5 is provided with an annular gear box 6 which encases an external gear 6A (see Fig. 4). The main gear is directly driven by the turbine rotor 3. Six pinions 7A (Fig. 4) engage the main gear 6A.

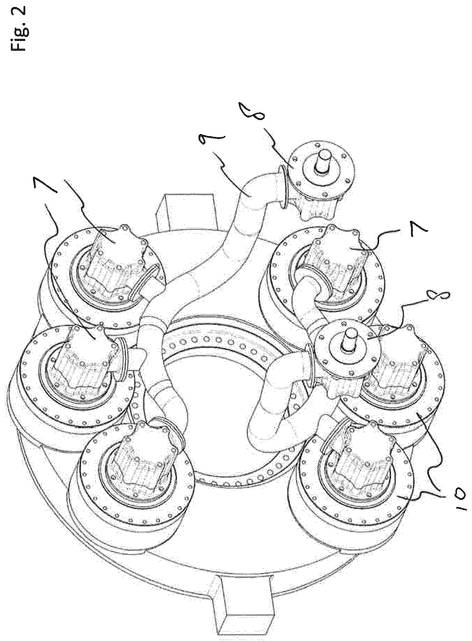

Fig. 2 shows the drive train 5 at a larger scale. The drive train 5 comprises six hydraulic pumps 7 and two hydro motors 8. Each pump 7 is driven by one of the pinions and each hydro motor 8 is connected to three pumps 7 via respective high pressure lines 9 and low pressure lines (not shown). Each of the hydro motors 8 engage an input shaft of the respective generators 4 for driving the respective generators 4.

Between each pinion and the cooperating hydraulic pump 7 a planetary gear transmission 10 is arranged. This means that a mechanical transmission through two gear transmission stages is applied.

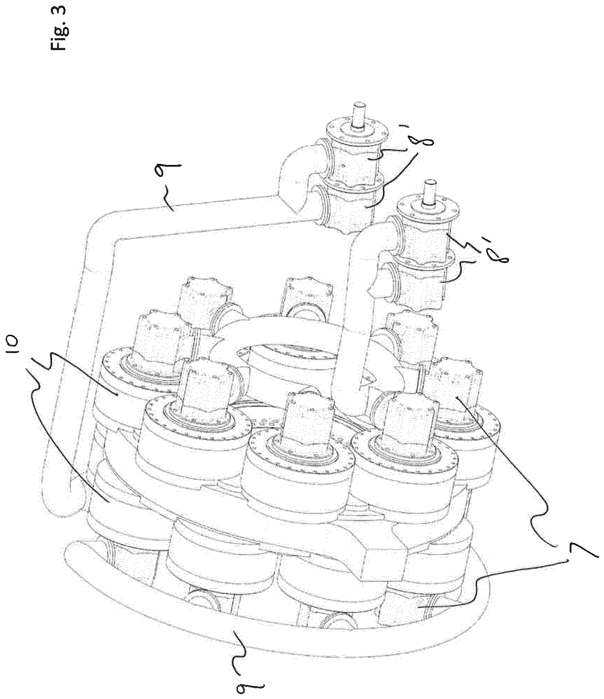

Fig. 3 shows a part of an alternative embodiment of the wind turbine 1. In this case the drive train 5 comprises 16 pumps 7, of which eight pumps 7 are located at a front side of the main gear 6 and eight pumps 7 are located at a rear side of the main gear 6. Furthermore, the drive train 5 of this embodiment comprises two double hydro motors 8', in which the shafts of two similar hydro motors are coupled to each other. The pumps 7 at the front side are connected to one of the double hydro motors 8', whereas the pumps 7 at the rear side are connected to the other double hydro motors 8'.

In the embodiments as shown the respective pumps 7 and the respective motors 8 are similar, such that wind turbines with varying power capacities can be built in a modular way by varying the number of pumps 7, motors 8 and generators 4 without changing the dimensions of the turbine rotor 3 and main gear 6.

## Claims

1. A wind turbine (1) comprising a turbine rotor (3) with one or more blades, a generator (4), a drive train (5) interconnecting the turbine rotor (3) and the generator (4), wherein the drive train (5) is provided with a main gear (6) directly driven by the turbine rotor (3), a plurality of pinions engaging the main gear (6), a plurality of hydraulic pumps (7), each pump (7) being driven by one of said pinions, at least one hydro motor (8) connected to the respective pumps (7) via respective high pressure (9) and low pressure lines, the at least one hydro motor (8) engaging an input shaft of the generator (4), **characterized in that** a planetary gear transmission (10) is arranged between each pinion and the respective hydraulic pump (7).

2. A wind turbine (1) according to claim 1, wherein the hydro motor has substantially the same capacity as each of the pumps.

3. A wind turbine (1), optionally according to claim 1 or 2, wherein the pumps (7) are located at opposite sides of the main gear (6).

4. A wind turbine (1) according to one of the preceding claims, wherein the main gear (6) is an external gear.

5. A wind turbine (1) according to one of the preceding claims, wherein the pumps (7) have substantially the same capacity.

6. A wind turbine (1) according to one of the preceding claims, wherein the drive train (5) has at least two hydro motors (8), which have substantially the same capacity.

7. A wind turbine according to any preceding claim comprising an annular gear box encasing the main gear and supporting the planetary gear transmissions and the hydraulic pumps.
